# EUROPEAN PATENT APPLICATION

(11) **EP 2 759 278 A2**
(43) Date of publication of application: **30.07.2014**
(21) Application number: 14000336.9
(22) Date of filing: 29.01.2014
(51) Int. Cl.: A61C 11/00, A61C 13/34

(54) **Device and method for manufacturing dental prostheses**

(30) Priority: 29.01.2013 IT CT20130002
(71) Applicant: Calandra, Fabio, 92023 Campobello di Licata (AG) (IT)
(72) Inventor: Calandra, Fabio, 92023 Campobello di Licata (AG) (IT)

(57) **Abstract**

A device for manufacturing dental prosthesis comprises an articulation cast (2) having at least one supporting portion or wax rim (3) in a plastically yieldable material and provided with an at least partial imprint of the dental arch of the patient which the prosthesis is designed for, a plurality of shaped elements (4, 4') adapted to be removably and adjustably applied to the deformable supporting portion (3), each of them reproducing the profile of a corresponding tooth to simulate a portion of the dental arch of the prosthesis to be manufactured. The shaped elements (4, 4') are arranged into a plurality of series (S, S', S") adapted to be selectively applied to the supporting portion (3), the shaped elements (4, 4') of each series (S, S', S") being joined with each other in side-by-side positions reciprocally aligned along a longitudinal direction (L) by means of a substantially elongated and elastically deformable connecting member (5) adapted to allow the joined application of the shaped elements (4, 4') of the corresponding series (S, S', S") and the regulation of the respective reciprocal positions along at least one predetermined direction.

## Description

### Technical Field

The present invention relates to the technical field of the dental medicine and in particular has as object a device and a method for manufacturing dental prostheses.

### State of the art

Manufacturing a dental prosthesis, either the upper one and/or the lower one or a prosthesis to be realized on a dental implant, is a rather complex operation, especially in the case of an edentulous patient, as both the dentist and the prosthodontist have to consider several factors when selecting the shape and the position of teeth, in order to meet not only functional requirements but also aesthetic and phonetic ones.

As matter of fact, it is known that the position of the upper and lower front teeth, and in particular their mutual inclination and the distance between the upper and lower incisal edges, as well as the distance between the upper incisal edge and the lower lip, affect the proper phonation and in particular the pronunciation of phonemes S, F and V. Furthermore, the right positioning of incisors and canines influences the proper aesthetic configuration of the lip and it is necessary in order to allow the lip to protrude and not sag, the prolabium be evident and the philtrum, namely the depression between the tubercle of the upper lip and the nasal septum, be not flat.

Since the anatomy of the lip varies from patient to patient, it is clear that in this case it is not possible to apply the general principles without the risk of obtaining unsatisfactory results.

By contrast, from a functional point of view, it is necessary to avoid that during chewing the lower lip protrudes excessively due to an eventual prognathic position of the mandible.

Last but not least, it is important to establish the right angle of the teeth in order to respect the natural relationships between the cervical portion of the tooth and the outlying gum areas.

In summary, during the assembly step of the teeth, the technician or technicians, have three main unknown elements, represented by the inclination of the teeth and their correct position below the alveolar crest and in front thereof.

The known techniques are generally carried out using a plurality of steps requiring the patient to be subjected to a high number of sessions, in order to obtain a satisfactory teeth arrangement.

In particular, the most popular methods provide, for an edentulous patient, a first session for obtaining the teeth imprints for manufacturing the individual stock tray to be sent to the laboratory for the gypsum pouring required to get the final models.

On this latter, the prosthodontist may build resin plates with a wax rim with whom, during a second session, he may obtain the right measures and references for manufacturing the definitive prosthesis.

Next, a third session may be necessary during which the plates provided with the teeth could be tested on the patient. However, if the patient is not satisfied with the final result, it will be necessary to return the plate back to the laboratory to mount new teeth for testing them again on the patient, during a further session, repeating the procedure until the desired result will be obtained.

Therefore, it is apparent that similar operating methods take a long time, are uneconomic and with low degree of comfort for the patient and often lead to an unsatisfactory result as you can be brought to accept a not perfect job rather than to undergo new sessions and to be subjected to further expenses.

US2229780 discloses a method and an apparatus for realizing dental prostheses which provide the application of artificial teeth arranged in a plurality of series each of which is designed to reproduce a specific portion of the dental arch.

Those series of teeth are arranged in reciprocally side-by-side positions on an articulation cast in order to adjust their relative position. Furthermore, each series of teeth is constituted by a plurality of shaped elements whose mutual position is also adjustable.

However, even this solution is not free from the above drawbacks, since it does not allow to verify immediately that the prosthesis is in accordance to the needs of the patient and then, if the shape of the dental prosthesis is not satisfactory, the whole apparatus has to return back to the laboratory for preparing a new prosthesis that can be tested on the patient only during a new session.

Indeed, both the mutual positioning of the various series of teeth and the mutual orientation of the teeth of each series are not adjusted directly into the mouth of the patient but on an articulation cast made in the laboratory and then with the sextuplet of teeth that cannot be replaced during the measuring step of the vertical dimension and of the centric occlusion.

Therefore, the patient cannot check, immediately and prior to the implantation of the prosthesis, if the new prosthesis is satisfactory both phonetically and aesthetically. US2009117518 discloses a dental prosthesis which includes a band of teeth joined together by a thread-like element that allows the mutual movements so as to allow individual angular displacements.

Thus, the dentist can try the correct position of the teeth directly in the patient's mouth and before proceeding to the final fixing of the teeth.

However, a first drawback is constituted by the fact that the dentist has only one band with the teeth to be fixed in the dental prosthesis.

Therefore, if the configuration of the prosthesis docs not meet the needs of the patient, either from an anatomical point of view or phonetically or simply aesthetically, he/her has to return back to the laboratory to replace the previously selected sextuplet and realize a new prosthesis, with evident increasing of costs and operation time. Furthermore, the hand of teeth is applied directly on the final denture base, whereby in the case where the test of the prosthesis does not give satisfactory results it may also be necessary to remove the dentures to replace it with a new one.

### Scope of the invention

An object of the present invention is to overcome the above drawbacks, providing a device for manufacturing dental prosthesis allowing the manufacturing of a prototype or model of a prosthesis in a particularly rapid and easy way.

A particular object is to provide a device for manufacturing dental prostheses which allows to manufacture an even partial model or prototype of a dental prosthesis with satisfactory features both from a functional point of view that from an aesthetic and phonetic point of view in a relatively limited number of sessions for the patient, increasing the comfort and reducing costs both for the patient and the technician. Another object is to provide a device for manufacturing dental prostheses which allows a patient to try several configurations of the teeth during a same session.

Not the last object of the present invention is to provide a method for manufacturing dental prostheses which is particularly fast and effective.

These objects, as well as others which will become more apparent hereinafter, are achieved by a device for manufacturing dental prostheses which, according to claim 1, comprises an articulation cast having at least one supporting portion or wax rim in a plastically yieldable material and provided with an at least partial imprint of the dental arch of the patient which the prosthesis is designed for, a plurality of shaped elements adapted to be removably and adjustably applied to said yieldable supporting portion, each of said shaped elements reproducing the profile of a corresponding tooth to simulate a portion of the dental arch of the prosthesis to be manufactured, wherein said shaped elements are arranged into a plurality of series, the shaped elements of each of said series being joined with each other in reciprocally side-by-side positions by connecting means adapted to allow the joined application thereof to said imprint of said yieldable supporting portion and the regulation of the respective reciprocal positions along at least one predetermined direction.

The series are adapted to be applied selectively and alternatively with each other to said deformable portion at a same part of said imprint to reproduce a same portion of the dental arch and the yieldable portion is adapted to be removably inserted in the patient's mouth to adjust the mutual positioning of said shaped elements directly in the patient's mouth to define, after its removal, a matrix for realizing the final denture.

Thanks to this combination of features, the device will allow to position, even during a same session, or in more sessions, a plurality of series of shaped elements reproducing different configurations of teeth, so as to provide an immediate feedback to the patient about the final effect of the prosthesis and achieve the optimum result in a simple, fast and comfortable manner.

According to a further aspect of the invention a method for manufacturing a dental prosthesis is provided according to claim 12.

### Brief disclosure of the drawings

Further features and advantages of the invention will become more apparent in light of the detailed description of a preferred but not limiting embodiments of the device for manufacturing dental prostheses according to the invention, shown in way of a non-limiting example with the aid of the attached drawings wherein:
**FIG. 1** is a front perspective view of the device of the invention;
**FIG. 2** is a partial angular perspective view of the device according to the invention;
**FIG. 3** is a partial front view of the device according to the invention;
**FIG. 4** is a partial top view of the device according to the invention;
**FIG. 5** is a front perspective view of the device according to the invention without the shaped elements;
**FIG. 6** is a whole view of some series of shaped elements reproducing the teeth to be implanted and arranged in function of their plan shape and cross-section shape;
**FIG. 7** is a cross-sectional side view of the device according to the invention;
**FIG. 8** is a cross-sectional side view of the device according to the invention with the shaped elements in two distinct embodiments necessary to obtain phonetic and aesthetic checking.

### Best mode of carrying out the invention

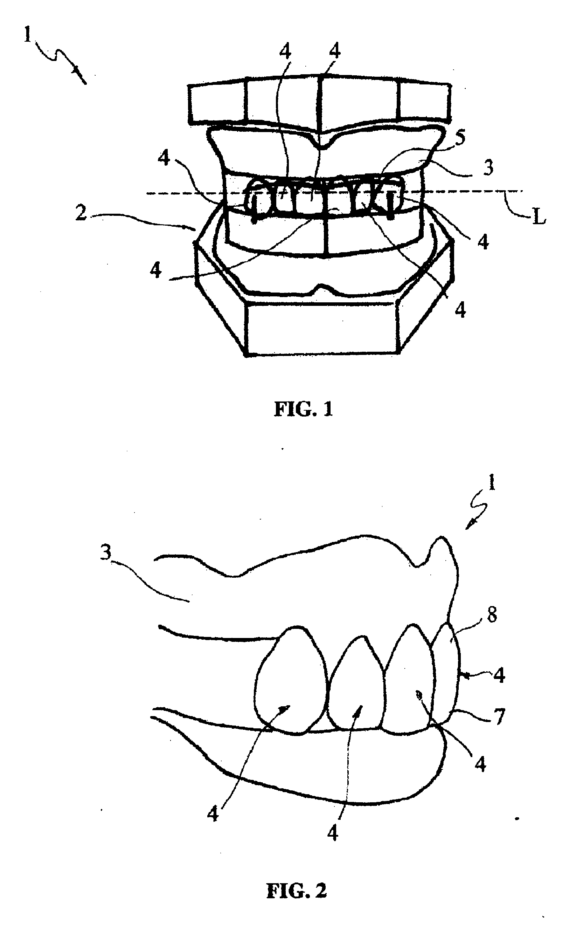

With reference to the above figures, a device for manufacturing dental prostheses according to the invention is shown which device being designed to be used by a prosthodontist and/or by a dentist for realizing the models necessary for the configuration of a definitive dental prosthesis for patients totally or partially edentulous. As shown in **Fig.1****,** the device, generally designated by 1, comprises an articulation cast 2 having at least one support portion or chewing rim 3 made of a plastically deformable material, such as wax or similar material, adapted to plastically deform to be modeled above the cast of a dental arch imprint.

In particular, in a known manner, the rim 3 will he adapted to reproduce thereon a patient's chewing corresponding to his/her imprint of the dental arch, so that such an at least partial dental arch imprint to be realized may be impressed on the rim 3.

The rim 3 may be obtained in the laboratory starting from a stock tray or precision spoon used during a first session, according to any of the known techniques, therefore not disclosed during the present description.

In particular, the tray will be used to obtain the teeth imprint of the patient and obtain a mould on which the deformable rim 3 may be realized.

Therefore, the device 1 may comprise a plurality of shaped elements 4 adapted to be removably and adjustably applied to the deformable rim 3, at a predetermined portion of the above imprint.

Each of these shaped elements 4 will reproduce, at least in front plant, the profile of a respective tooth to be reconstructed in the laboratory, so that the application of shaped elements 4 on the rim 3 may simulate a portion of the dental arch of the prosthesis to be manufactured.

In particular, the shaped elements 4 may be arranged in a plurality of series S, S', S" adapted to be applied selectively and one at a time, in an alternative manner with each other, on the rim or support portion 3, always at the same part of the teeth imprint.

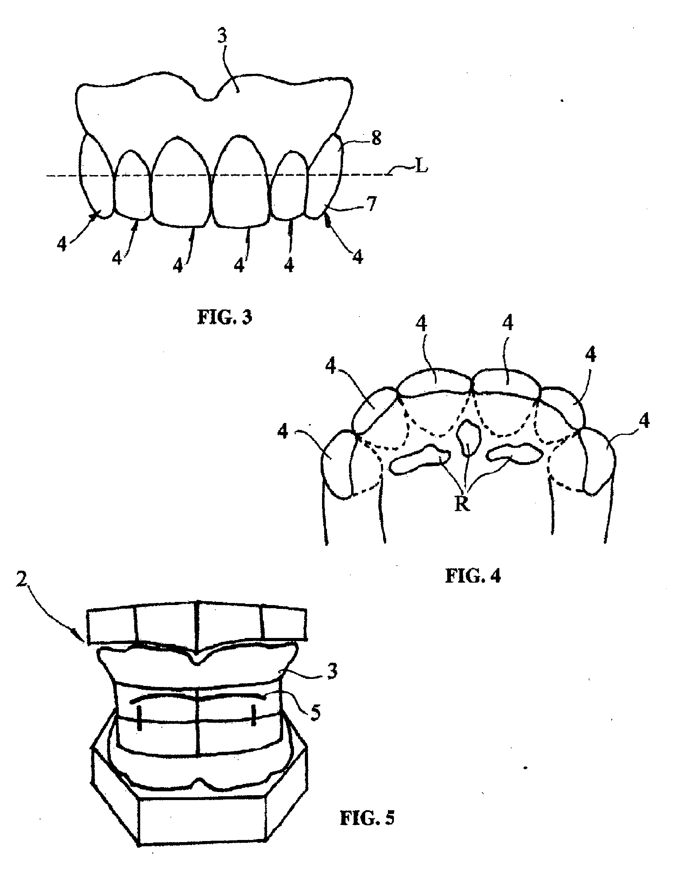

**Fig. 2** and **Fig. 3** partially show the device 1 respectively according to a perspective view and a front view and wherein a series S of shaped elements 4 is applied on the rim 3 to reproduce the upper front teeth, in particular incisors and canines.

**Fig. 4** also shows an upper view of the same device 1 wherein the palatine folds are referred with R.

Suitably, the shaped elements 4 of each series S, S', S" will be mutually joined in side-by-side positions mutually aligned along a longitudinal direction L by means of a connecting element 5, shown both in **Fig. 1****,** wherein it is applied to the shaped elements 4, and in **Fig. 5****,** wherein it is shown with the sole articulation cast 2.

The connecting element 5 will be substantially elongated and elastically deformable to allow the unitary application of the respective series S, S', S" of shaped elements 4 to the rim 3 and at the same time to allow the adjustment of the mutual positions of the shaped elements 4 along at least one predetermined direction.

Preferably, the substantially elongated connecting element 5 will be selected among between the wire elements, ribbon elements or the likeand and will be adapted to allow the relative adjustment movement of the shaped elements 4 of a same series S, S', S" along a plurality of directions in the whole space, so as to obtain high configurability of a same series S, S', S" of shaped elements 4 designed to define the model for the prosthesis.

The connecting element 5 may be made of any material, whether metallic or polymeric, but always provided with proper flexibility and possibly being with shape memory. Suitably, for aesthetic reasons, it will be substantially in the same color of the shaped elements 4 of the respective series S, S', S".

According to alternative embodiments, not shown, the wire connecting element 5 may be replaced or used in combination with further connecting means adapted to allow the join application of the shaped elements 4 of a same series S, S', S" and the adjusting of the respective positions.

For example, the connecting means may be of the male and female type and may comprise for each shaped element 4 a male element and a female element associated to opposite transverse edges thereof for coupling respectively with a female element and with a male element of two further shaped elements in side-by-side relationship from opposite sides and owning to the same series S, S', S".

In a particularly preferred manner, the male element will be a projecting element with a front profile having a substantially semicircular shape and adapted to fit into a corresponding complementary shaped female element associated with the facing transverse edge of the adjacent shaped element, in such a way that after the coupling of the shaped elements a substantially visual continuity of the respective front surface will be obtained.

Moreover, the male element may rotate about one or more axes relative to the corresponding female element coupled therewith for allowing the position of the respective shaped elements to be adjusted in a plane or even in the space.

Preferably, the shaped elements 4 of a same series S, S', S" will be substantially of uniform shape, size and/or color with each other.

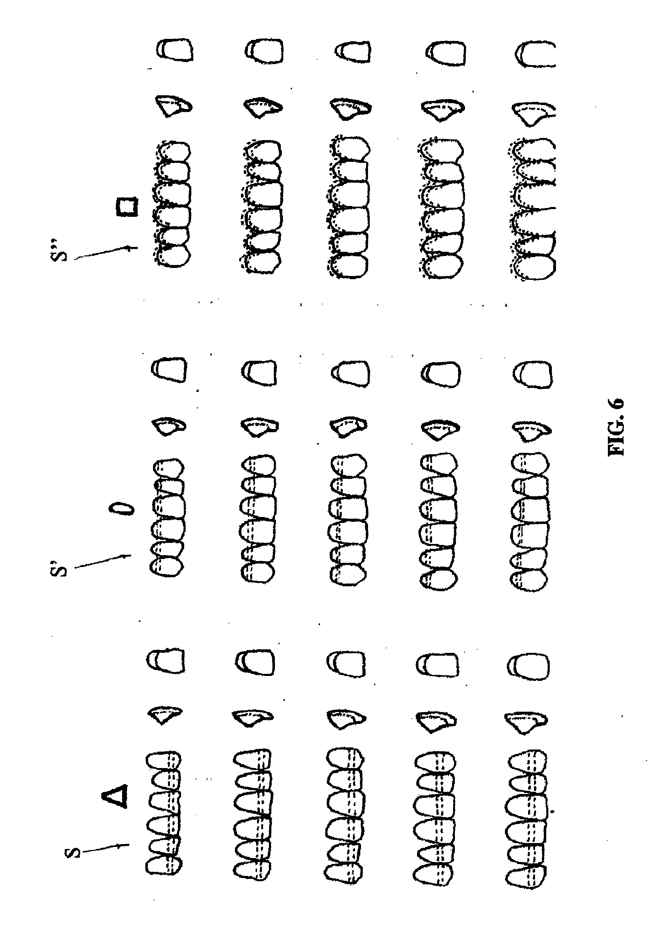

For example, as schematically shown in **Fig. 6****,** the series S, S', S" of shaped elements 4 may be arranged according to the plan shape of the shaped elements 4, which may be substantially triangular, substantially oval or oblong or substantially rectangular. Within a same series S, S', S", the shaped elements 4 will be homogeneous with respect of the cross-sectional profile and preferably homogeneous in their color.

Moreover, the rim 3 will be adapted to be inserted directly into the patient's mouth to allow the selection of the most suitable among the series S, S', S" from a phonetic and/or aesthetic point of view and to adjust of the mutual position of the individual shaped elements 4, 4' of the selected series.

Thus, during a same session, the patient may test a multiplicity of series S, S', S" of artificial teeth, according to his/her own preferences, as will be sufficient to remove from the rim 3 the series S, S', S" previously tested and apply a further series S, S', S". The rim 3 will represent a temporary support not designed to rest in the patient's mouth and whose further function will be that of being a mold useful for realizing the final denture.

In the preferred but not exclusive embodiments of the figures, each series S, S', S" will consist of six shaped elements 4 reproducing upper incisors and canines. However, the shaped elements 4 may also reproduce lower incisors and canines, in this case everything said above for the shaped elements 4 reproducing the upper teeth also applying.

Moreover, also the number of elements 4 constituting the single series S, S', S" may be different, either greater or lower than six, depending on the needs. However, the shown embodiment is the preferred one as the main functional, aesthetic and phonetic features are related to a correct adjustment of the position of the canines and incisors.

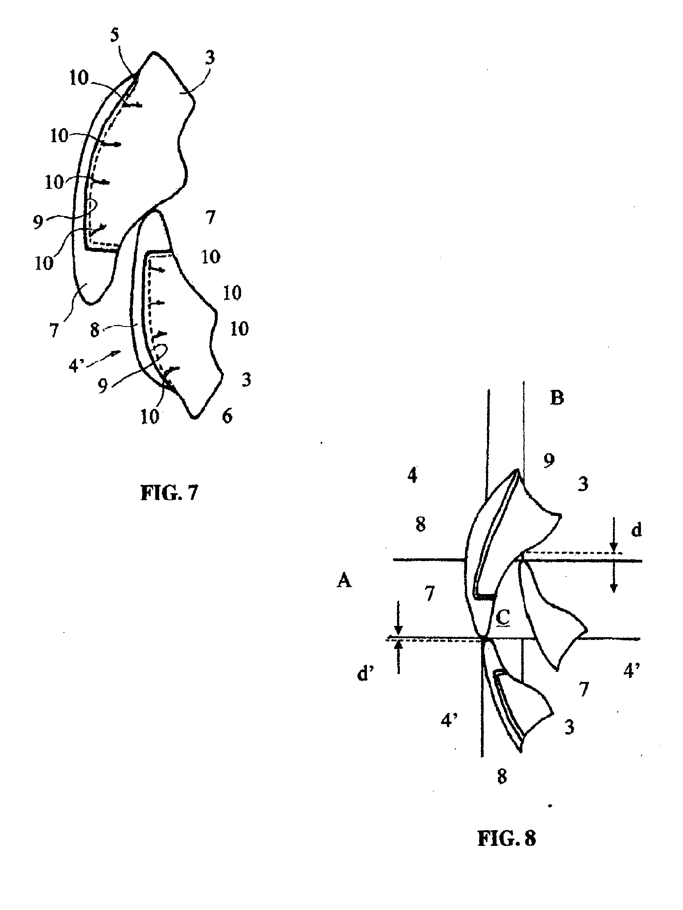

As most clearly visible in **Fig. 7****,** the shaped elements 4 may also comprise means 6 for their removable anchoring to the rim 3 or deformable support portion.

Furthermore, each shaped element 4 may have a first end portion 7 adapted to transversely project with respect to the deformable support portion 3, for example downward in the case of the shown embodiments or upwards in the case in which the shaped elements 4 represents the lower teeth.

Additionally, each shaped element 4 may have a second end portion 8 provided with the anchoring means 6 and adapted to be superimposed on the deformable support portion 3.

In a preferred embodiment, not shown in the figures, each shaped element 4 may be totally 3D-shaped to completely reproduce the shape of the respective tooth.

According to the preferred form of the figures, each shaped element 4 has the respective first end portion 7 having a substantially 3D shape for reproducing the entire margin of the respective tooth to be simulated and a second end portion 8 consisting of a relatively thin wall with a substantially constant thickness and adapted to reproduce the cervical area of the tooth to be simulated.

Suitably, the thin wall 8 will have a milled rear face 9 provided with the anchoring means 6.

These latter may comprise, for example, a plurality of nails 10 or similar elements with micrometric dimensions protruding from the rear face 9, orthogonally thereto, to penetrate the material of the deformable support portion or rim 3.

Thus, both the anchoring of the shaped elements 4 to the rim 3 and their movement with respect to the rim 3 to adjust their transverse and/or longitudinal position and/or inclination will be semplifyed.

Preferably, the connecting element 5 may extend in a substantially longitudinal direction X in correspondence of the second end portions 8 of the shaped elements 4, in order to allow limited but precise and free movements with respect to any direction of the space between the shaped elements 4.

In this way it will be possible to immediately obtain an effective and efficient feedback, both phonetically and aesthetically, of the correct positioning of the shaped elements 4, and then of the teeth that will define the prosthesis, making possible to carry out the needed adjustments in one session.

For example, as schematically shown in **Fig. 8****,** the upper elements 4 may be moved relative to the lower ones 4' to define the reference planes for the correct functionality and phonation of the prosthesis.

In particular, in **Fig. 8** the area A is the area of ovcrbitc, i.e. the area with vertical over-occlusion, while the area B is that of overjet, i.e. the area with horizontal over-occlusion.

In turn, the dimension d represents the vertical distance to be provided between opposing teeth in order to obtain a centric occlusion. The vertical distance d' represents the distance between the upper and lower incisal edges for the correct pronunciation of the phoneme S. Finally, the area C represents the phonetic space.

Thus, it is clear that the technician may easily adjust the position of the teeth starting from known considerations on the requirements about the positioning of teeth.

The materials adapted to be used for realizing the shaped elements 4 do not represent a limit to the scope of protection of the present invention and may be of any type. According to some preferred variants, the above materials may be selected in the group comprising the resins or other polymeric materials, the ceramic materials, the composite materials, the materials containing zirconium or the like.

In a particular variant, the materials may be radiopaque so as to be visible to a radiography to use the shaped elements 4 as an implant template.

Moerover, the device 1 may he of the single-use type, for example disposable, or may be reusable and therefore constituting a medical room kit, or a tool adaptet to be used by the technician to explain to the patient the final result. In this last case, at least the materials used for the shaped elements 4 may be adapted to be hot and/or cold sterilized. The device 1 so designed may find further applications in the dental field, in particular in CAD-CAM applications, for example in the realization of individual abutments or to realize a screwed bar on implants because, once positioned the shaped elements 4 on the cast 2, it will be possible exectuing a scan to visualize on the monitor the shadow thereof, allowing the thecnician to estimate the space required, and protect the housings for hosting the teeth made of resin, composite material or zirconium-based material. According to a further aspect of the invention, a method for manufacturing a dental prosthesis is provided which method requires the manufacturing of the device 1 disclosed above, necessary to define the model for manufactueing the real prosthesis. The method is characterized by comprising a step a) of providing an articulation cast 2 having a support portion or chewing rim 3 in a plastically deformable material provided with an at least partial imprint of the dental arch of the patient.

The making of the rim 3 having the imprint may be obtained according to any mode, also of known type and without any particular limitation to the scope of protection of the present invention.

There is also a step b) for providing a plurality of shaped elements 4 each reproducing the profile of a tooth designed to define the dental arch of the prosthesis to be realized. As also specified above, the shaped elements 4 will be arranged in a plurality of series S, S', S" made by the same number of shaped elements 4 mutually joined with each other in side-by-side and mutually aligned positions.

Subsequently the rim 3 with its imprint will be inserted (step c) in the patient's mouth and then a step d) will be carried out for selecting one of these series S, S', S" of shaped elements 4 designed to be applied to the rim 3 or support portion at a predetermined portion of the imprint impressed thereon.

If the selected series does not give satisfactory results, it will be removed and replaced (step e) with a further set of the plurality which will be inserted at the same part of the imprint on which the other series was previously applied.

The above steps from c) to e) will be possibly repeated (step f) up to the selection of the optimal series.

At this point, a step g) may be carried out for the independent adjustment of the position of each of the shaped elements 4 of the selected series S, S', S" applied to the support portion 3, to adjust the aesthetic, phonetic and functional features of the prosthesis to be manufactured.

At the end of this last step a step h) will be carried out for picking up the assembly constituted by the articulation cast 2 and the selected series S, S', S" to send it to the laboratory and to allow the realization of the prosthesis, which may be performed according to a variety of techniques, without particular limitations.

From the above it appears evident that the invention achieves the intended objects and in particular to make available a device and a method that allow to create models of dental prostheses in a relatively short time and with a reduced number of sessions, increasing the comfort for the patient and reducing overall costs.

The device and the method according to the invention are susceptible of numerous modifications and variations, all falling within the inventive concept expressed in the appended claims. All the details may be replaced with other technically equivalent elements, and the materials may be different depending on the needs, without departing from the scope of protection of the present invention.

Although the device and method have been disclosed with particular reference to the annexed figures, reference numbers used in the description and in the claims are used to improve the intelligence of the invention and do not constitute any limitation to the scope of protection claimed.

## Claims

1. A device (1) for manufacturing dental prosthesis, comprising:
- an articulation cast (2) having at least one supporting portion or wax rim (3) in a plastically yieldable material and provided with an at least partial imprint of the dental arch of the patient which the prosthesis is designed for;
- a plurality of shaped elements (4, 4') adapted to be removably and adjustably applied to said yieldable supporting portion (3), each of said shaped elements (4, 4') reproducing the profile of a corresponding tooth to simulate a portion of the dental arch of the prosthesis to be manufactured;
wherein said shaped elements (4, 4') are arranged into a plurality of series (S, S', S"), the shaped elements (4, 4') of each of said series (S, S', S") being joined with each other in mutual side-by-side positions by connecting means adapted to allow the joined application of the shaped elements (4, 4') of the corresponding series (S, S', S") to said imprint of said yieldable supporting portion (3) and the regulation of the respective reciprocal positions along at least one predetermined direction.
**characterized in that** the series (S, S', S") of said plurality are adapted to be applied selectively and alternatively with each other to said deformable portion (3) at a same part of said imprint to reproduce a same portion of the dental arch and **in that** the yieldable portion (3) is adapted to be removably inserted in the patient's mouth to adjust the mutual positioning of said shaped elements (4, 4') directly in the patient's mouth to define, after its removal, a matrix for realizing the final denture.

2. Device as claimed in claim 1, **characterized in that** said connecting means comprise a substantially elongated connecting element (5) elastically yieldable.

3. Device as claimed in claim 2, **characterized in that** said substantially elongated connecting element (5) is selected between the wire-, belt- or similarly shaped elements (5) and is adapted to allow the mutual adjusting movement of the shaped elements (4, 4') of a same series (S, S', S") along a plurality of directions.

4. Device as claimed in claim 1, **characterized in that** said connecting means comprise for each of said shaped elements (4, 4') a male element and a female element associated with opposite transverse edges of said shaped element (4, 4') and adapted to be coupled respectively with a female element and with a male element of a pair of further adjacent shaped elements (4, 4') of a same of said series (S, S', S").

5. Device as claimed in any preceding claim, **characterized in that** the shaped elements (4, 4') of a same of said series (S, S', S") are substantially homogeneous therebetween in their shapes, dimensions and colors and are each provided with means (6) for the removable anchoring to said yieldable supporting portion (3).

6. Device as claimed in claim 5, **characterized in that** each of said series (S, S', S") consists of six shaped elements (4, 4') reproducing the upper incisive and canines, or the lower incisive and canines, each of said shaped elements (4, 4') having a first end portion (7) adapted to transversally project with respect of said supporting portion (3) and a second end portion (8) provided with said anchoring means (6) and adapted to overlay said yieldable supporting portion (3).

7. Device as claimed in claim 6, **characterized in that** said connecting element (5) extends along a substantially longitudinal direction (L) at said second end portions (8) of said shaped elements (4, 4').

8. Device as claimed in claim 6 or 7, **characterized in that** each of said shaped elements (4, 4') has the respective first end portion (7) substantially 3D shaped and totally reproducing the margin of the respective tooth to be simulated and a second end portion (8) made by a thin wall with a substantially constant thickness adapted to reproduce the cervical area of the tooth to be simulated, said thin wall (8) having a milled rear face (9) provided with said anchoring means (6).

9. Device as claimed in claim 8, **characterized in that** said anchoring means (6) comprise a plurality of nails (10) or similar elements having micrometric size and projecting from said rear face (9) orthogonal thereto for penetrating the material of said yieldable supporting portion (3).

10. Device as claimed in any preceding claim, **characterized in that** said shaped elements (4, 4') are made of a material selected into the group comprising resin or other polymeric materials, ceramic materials, composite materials, the materials containing zirconium or the like, possibly radiopaque and/or adapted to be hot and/or cold sterilized.

11. Device as claimed in any preceding claim, **characterized in that** said yieldable supporting portion (3) of said articulation cast (2) is made of wax or similar materials.

12. A method for manufacturing a dental prosthesis, **characterized by** comprising the following steps:
a) providing an articulation cast (2) having a supporting portion or wax rim (3) in a plastically yieldable material provided with an at least partial imprint of the dental arch to be reproduced;
b) providing a plurality of shaped elements (4, 4') each reproducing the profile of a tooth designed to define the dental arch of the prosthesis to be realized, said shaped elements (4, 4') being arranged into a plurality of series (S, S', S") comprising a same number of shaped elements (4, 4') joined with each other in reciprocally side-by-side and aligned positions;
c) inserting said yieldable portion in the patient's mouth;
d) selecting only one of said series (S, S', S") of shaped elements (4, 4') and applying it to said supporting portion (3) inserted into the patient's mouth at a predetermined part of said imprint;
e) possibly removing said series (S, S', S") and substituting it with a further series (S, S', S") of said plurality to be placed at the same part of said imprint;
f) possibly iterating said steps c) and/or o d) up to the selection of the optimal series (S, S', S");
g) adjusting the position of each of said shaped elements (4, 4') of the selected series (S, S', S") with respect of said supporting portion (3) to adjust the aesthetical, phonetic and functional properties of the prosthesis to be realized;
h) taking the assembly made by said articulation cast (2) and said selected series (S, S', S") of shaped elements (4, 4') and sending it to the laboratory to realize the prosthesis.
